# EUROPÄISCHE PATENTSCHRIFT

(11) **EP 2 274 200 B1**
(45) Veröffentlichungstag und Bekanntmachung des Hinweises auf die Patenterteilung: **10.06.2015**
(21) Anmeldenummer: 08852336.0
(22) Anmeldetag: 21.11.2008
(51) Int. Cl.: B64C 9/16, B64C 9/20, B64C 13/34, B64C 13/38

(54) **LANDEKLAPPENKINEMATIK ANGETRIEBEN ÜBER RITZELANTRIEB**
LANDING FLAP MECHANISM DRIVEN BY PINION GEARS
CINÉMATIQUE DE VOLET D'ATTERRISSAGE À ENTRAÎNEMENT PAR PIGNON

(30) Priorität: 21.11.2007 DE 102007055669
(43) Veröffentlichungstag der Anmeldung: 19.01.2011
(73) Patentinhaber: Airbus Operations GmbH, 21129 Hamburg (DE)
(72) Erfinder: GARTELMANN, Rainer, 28279 Bremen (DE)
(74) Vertreter: UEXKÜLL & STOLBERG
(86) Internationale Anmeldenummer: PCT/EP2008/009884
(87) Internationale Veröffentlichungsnummer: WO 2009/065597

(56) Entgegenhaltungen:
- WO-A-85/00573
- DE-A1- 2 839 050
- DE-C- 605 554
- DE-C1- 19 501 038
- GB-A- 941 904
- US-A- 1 868 748
- US-A- 2 146 014
- US-A- 2 966 808
- US-A- 4 131 253
- US-A- 4 742 730
- US-A- 5 098 043

## Beschreibung

Die Erfindung betrifft eine Verstellvorrichtung zum Bewegen einer Mehrzahl von Klappensegmenten sowie einen Flugzeugflügel mit einer solchen Verstellvorrichtung.

Die Dokumente US-A-4 131 253, GB 941 904 A, DE 605 554 C, US-A-1 868 748, DE 28 39 050 A1, WO 85/00573 A und US 2 146 014 beschreiben jeweils eine Vorrichtung zum Bewegen einer Hinterkantenklappe eines Flugzeugflügels.

Derartige Vorrichtungen werden bevorzugt so konzipiert, dass die Kinematik einer Hinterkantenklappe und dessen Antrieb im Zusammenspiel optimal zu einem gewünschten Bewegungsablauf und einer vorbestimmten Auslenkung der Hinterkantenklappe führen. Dabei haben sich bevorzugte Antriebsarten etabliert, wie etwa Schrauben-, Hydraulik- oder Winkelgetriebe. Bei Schrauben- oder Winkelgetrieben verlaufen Antriebstränge durch einen großen Bereich der Flügel von einer zentralen Antriebseinheit, die sich im Bereich des Flügel-Rumpf-Übergangs befindet, zu den Hinterkantenklappen. Gleichzeitig wird die Kinematik der zu bewegenden Hinterkantenklappen häufig durch aufwändige Führungseinrichtungen mit Schienen oder Rollen realisiert. Die o.g. Antriebe und die zugehörigen Kinematiken beanspruchen im Allgemeinen einen Bauraum bzw. Aktionsradius.

Für Kinematiken und deren Antriebe, welche einen besonders geringen Bauraum beanspruchen sollen, ist erforderlich, dass die Bauhöhe und der Aktionsradius des Antriebs relativ klein sind. Herkömmliche Schrauben-, Hydraulik- oder Winkelgetriebe und die zugehörigen Kinematiken können diese Anforderung nach besonders geringem Bauraum nicht realisieren. Insbesondere die für die Kinematik erforderlichen Bauelemente lassen sich nicht vollständig in der Flügelkontur integrieren, so dass sie bevorzugt aus der Flügelunterseite herausragen und durch sog. Flap-Track-Fairings verkleidet werden.

Die Aufgabe der Erfindung ist das Verringern oder Eliminieren der geschilderten Nachteile. Insbesondere ist Aufgabe der Erfindung, eine Verstellvorrichtung zum Bewegen einer Mehrzahl von Klappensegmenten sowie Flugzeugflügel mit einere solchen Verstellvorrichtung vorzuschlagen, die bzw. der einen besonders kompakten Aufbau aufweist und deren Lagerung und Kinematik sich nahezu vollständig in der Flügelkontur integrieren lässt.

Diese Aufgabe wird durch die Merkmale des unabhängigen Anspruchs gelöst. Weitere Ausführungsformen der Erfindung sind in den Unteransprüchen angegeben.

Die Aufgabe wird insbesondere durch eine Vorrichtung zum Bewegen einer Hinterkantenklappe eines Flugzeugflügels gelöst, bei der die Hinterkantenklappe ein oder mehrere Klappensegmente aufweist, wobei ein erstes Klappensegment bewegbar am Flügel gelagert und mit einem durch ein erstes Ritzel bewegtes erstes verzahntes Bewegungselement verbunden ist.

Vorteilhaft bei dieser Vorrichtung ist die besonders kompakte Gestaltungsart, da der Antrieb durch ein Ritzel, welches in ein verzahntes Bewegungselement eingreift, deutlich kompakter als ein Schrauben-, Winkel- oder Hydraulikgetriebe ausgeführt werden kann. Das verzahnte Bewegungselement kann etwa in ein Klappensegment integriert werden, so dass es sich vollständig innerhalb des jeweiligen Klappensegments befindet bzw. von den äußeren Dimensionen des Klappensegments überdeckt wird. Das Ritzel kann relativ zum Klappensegment ebenfalls so angeordnet werden, dass es zumindest in der Reiseflugstellung oder bei vollständig eingefahrenem Klappensegment nicht über die Dimensionen der Hinterkantenklappe hinausragt. Neben der direkten Anordnung der Komponenten innerhalb der Hinterkante ist es jedoch auch möglich, den Ritzelantrieb an anderer Stelle innerhalb des Flügels anzuordnen und die Bewegung des verzahnten Bewegungselements über eine Schubstange an das Klappensegment zu übertragen. Die Gestaltung der Kinematik der erfindungsgemäßen Vorrichtung stört die harmonische und aerodynamische Formgebung der Hinterkantenklappe nur wenig oder überhaupt nicht, so dass diese sich vorteilhaft von den im Stand der Technik üblichen Vorrichtungen abhebt.

Die zu bewegende Hinterkantenklappe weist mehr als nur das erste Klappensegment auf. Um bei Start und Landung des betreffenden Flugzeugs einen möglichst hohen Auftriebsbeiwert zu erreichen, ist eine Vergrößerung der Fläche und der Krümmung des Flügels notwendig. Durch eine Mehrzahl an Klappensegmenten, die sich relativ zueinander bewegen können, kann diese Anforderung erfüllt werden.

Gleichzeitig ist durch Segmentierung der Hinterkantenklappe möglich, Spalte zu schaffen, die einen Strömungsabriss auf der Oberseite des Flügels durch Zufuhr energiereicher Luftströmung verzögern oder eliminieren können. Die Anzahl der Klappensegmente ist abhängig von der geforderten Auftriebsleistung des Flügels und dessen aerodynamischer Umströmung. Es erweist sich bei einigen Flugzeugen bereits ein einzelnes Klappensegment als ausreichend für den Zweck der Hochauftriebsgenerierung, bei anderen hingegen sind zwei oder drei Klappensegmente erforderlich. Die konkrete Anzahl der Klappensegmente wird durch die erfindungsgemäße Vorrichtung nicht festgelegt, sondern unterliegt der erforderlichen aerodynamischen Auslegung durch einen Fachmann.

Als mögliche verzahnte Bewegungselemente kommen etwa Zahnstangen oder Zahnscheiben in Frage, die durch ein eingreifendes, rotierendes Ritzel die Antriebskräfte auf das jeweilige Klappensegment übertragen und den Bewegungsablauf des Klappensegmentes definiert vorgeben.

Besonders vorteilhaft ist eine Lagerung des jeweiligen Klappensegments mittels eines Scharniers, dessen Scharnierachse bevorzugt im Wesentlichen parallel zur Hinterkante ausgerichtet ist, so dass durch Antrieb einer am Klappensegment angeordneten Zahnscheibe, Zahnstange oder einer dadurch angetriebenen Schubstange eine Rotationsbewegung des Klappensegments erfolgen kann. Es ist hierbei von Vorteil, wenn das Ritzel in einem möglichst großen Abstand zur Schamierachse des jeweiligen Klappensegmentes angeordnet ist, um geringe Antriebmomente für das Ritzel und um damit eine Antriebseinheit mit kompakten Abmessungen zu erhalten.

Verwendet wird eine zentrale Antriebseinheit mit mehreren funktionell voneinander betrennten Getriebeeinheiten, welche dem jeweiligen Klappensegment zugeordnet sind. Jede dieser Getriebeeinheiten steuert das ihm zugeordnete Klappensegment über ein eigenes Ritzel an, das die Kräfte und Bewegung über eine Zahnscheibe und eine Schubstange auf das Klappensegment überträgt. Jede Getriebeeinheit ist in seiner Übersetzung auf den Bewegungsablauf des jeweiligen Klappensegments ausgelegt. Die einzelnen Getriebeeinheiten sind bevorzugt getrennt voneinander einkoppelbar und arretierbar. Die Erfindung wird nachfolgend anhand der Figuren näher erläutert. In den Figuren werden gleiche Objekte durch gleiche Bezugszeichen gekennzeichnet. Es werden zwei Ausführungsbeispiele mit jeweils drei Klappensegmenten vorgestellt. Es zeigen:
- Figur 1:: Draufsicht auf die erfindungsgemäße Vorrichtung,
- Figur 2a-c:: seitliche Schnittansichten eines Ausführungsbeispiels der erfindungsgemäßen Vorrichtung in Normalposition,
- Figur 3a-c:: seitliche Schnittansichten des Ausführungsbeispiels der erfindungsgemäßen Vorrichtung in Hochauftriebsposition,
- Figur 4a-b:: seitliche Schnittansichten eines nicht beanspruchten Klappenantriebs in Normal- und Hochauftriebsposition und
- Figur 5a-b:: seitliche Schnittansichten des Ausführungsbeispiels und des nicht beanspruchten Klappenantriebs in einer beispielhaften Reiseflugposition.

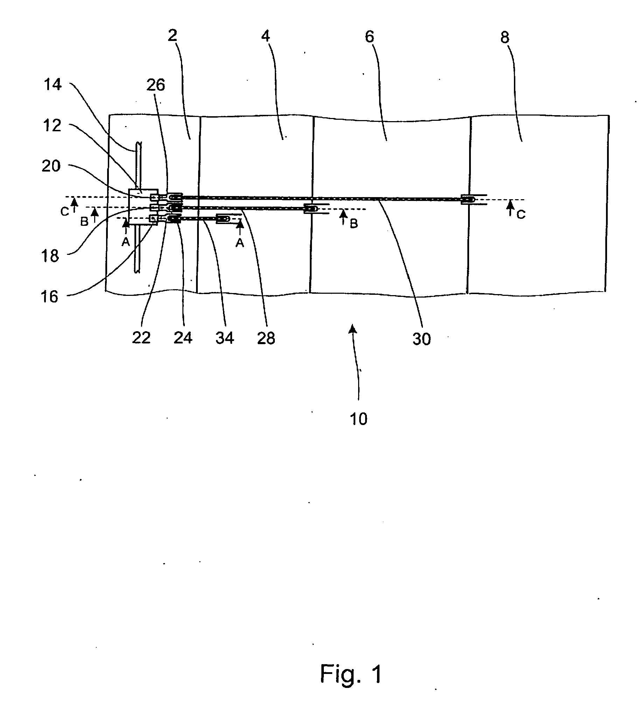

Figur 1 zeigt einen Flügel 2 mit einer aus drei Klappensegmenten 4, 6 und 8 bestehenden Hinterkantenklappe 10. In diesem Ausführungsbeispiel ist flügelfest ein Zentralantrieb 12 angeordnet, in den zwei Eingangswellen 14 münden, die etwa durch einen oder mehrere Elektromotoren angetrieben werden. Alternativ kann der Antrieb durch einen zentralen hydraulischen Antrieb wie bei herkömmlichen Hochauftriebssystemen mit Wellentransmission für beide Flügel erfolgen. Bei letzterer Alternative wäre eine Wellenführung bis zum Flügel-Rumpf-Übergang des Flugzeugs notwendig.

Der Zentralantrieb 12 treibt drei Ritzel 16, 18 und 20 an, welche wiederum in drei vorzugsweise an einem zum jeweiligen Ritzel 16,18 und 20 gewandten Umfangsabschnitt eine Verzahnung aufweisende Zahnscheiben 22, 24 und 26 eingreifen. Die Zahnscheiben 22, 24 und 26 sind an in Figur 1 nicht sichtbaren Scharnierpunkten am Boden des Zentralantriebs 12 oder am Flügel 2 gelagert. Die Ritzel 16, 18 und 20 liefern die Antriebsmomente und die Bewegungen über die Zahnscheiben 22, 24 und 26 auf die Klappensegmente 4, 6 und 8. Beispielhaft übertragen hierfür die Zahnscheiben 22, 24 und 26 ihre Bewegung jeweils über eine Schubstange 28, 30 und 34 an die Klappensegmente 4, 6 und 8.

Der Zentralantrieb ist in einzelne Getriebeeinheiten unterteilt, die jeweils separat ein zugeordnetes Klappensegment antreiben. Bei einer dreiteiligen Klappe weist der Zentralantrieb 12 demnach drei Getriebeeinheiten auf. Die Energieversorgung des Zentralantriebs 12 erfolgt über die Wellen 14. Da die einzelnen Klappensegmente unterschiedlich weit ausgelenkt werden, weist jede dem Klappensegment zugeordnete Getriebeeinheit eine andere, individuelle Übersetzung auf. Die einzelnen Getriebeeinheiten werden bevorzugt über elektromechanische Elemente gebremst oder ein- bzw. ausgekoppelt, so dass jedes einzelne der Klappensegmente 4, 6 und 8 individuell gesteuert und angetrieben werden kann. Durch die einzelnen voneinander getrennten Getriebeeinheiten des Zentralantriebs 12 und die individuelle Kopplung mit den Klappensegmenten 4, 6 und 8 sind die Antriebslasten voneinander entkoppelt. Dies bedeutet, dass jede Getriebeeinheit nur die Antriebslast des zugeordneten Klappensegments 4, 6 oder 8 aufnimmt und demnach die Antriebslast der kompletten Hinterkantenklappe 10 auf mehrere Antriebseinheiten verteilt wird.

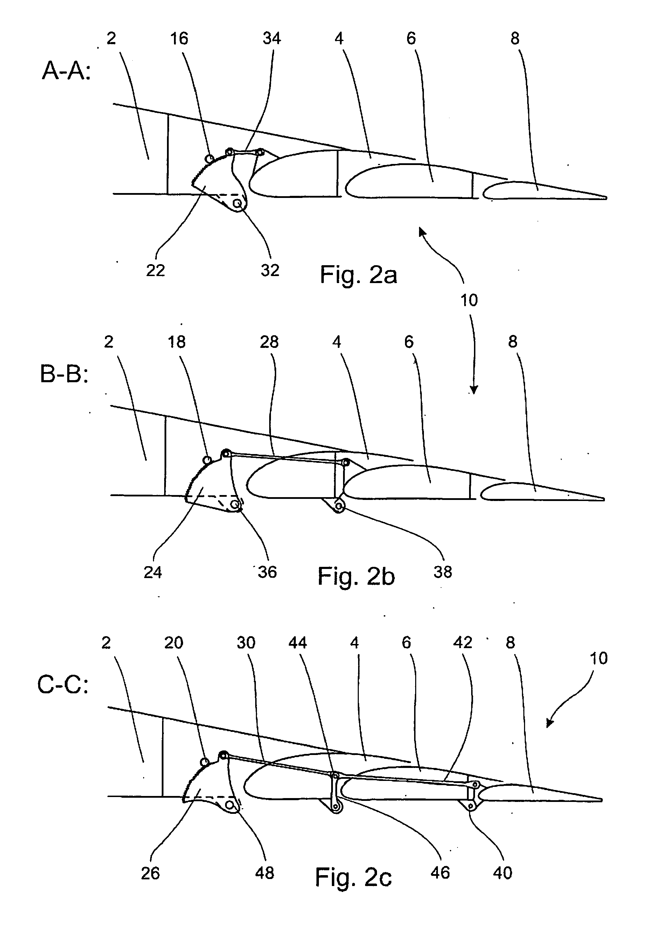

Die in Figur 1 durch A-A, B-B und C-C markierten Schnittebenen werden detailliert in den Figuren 2a, 2b und 2c gezeigt.

Figur 2a zeigt die Schnittebene A-A, in der die hintereinander angeordneten Klappensegmente 4, 6 und 8 ersichtlich sind. Die Zahnscheibe 22 wird mittels eines Scharniers 32 am Flügel 2 drehbar gelagert und mittels des eingreifenden Ritzels 16 bewegt. Die Zahnscheibe 22 ist exemplarisch über eine Schubstange 34 mit dem Klappensegment 4 verbunden, die die Bewegung der Zahnscheibe 22 an das Klappensegment 4 überträgt. Das Klappensegment 4 kann demnach durch Antreiben des Ritzels 16 vom Flügel 2 weg ausgelenkt oder zum Flügel 2 hin eingefahren werden. Die Bewegungskomponenten in horizontaler und vertikaler Richtung des Klappensegments 4 werden durch die Krümmung der Verzahnung der Zahnscheibe 22 und die Position des Scharniers 32 bezüglich des Flügels 2 bzw. des Klappensegments 4 im eingefahrenen Zustand bestimmt. Diese Parameter werden so ausgelegt, dass bei vollständig ausgelenktem Klappensegment 4 ein Spalt mit einer vorbestimmten Spaltbreite entsteht, falls für den Hochauftrieb erforderlich.

Figur 2b stellt die Schnittebene B-B dar und zeigt detaillierter, wie das entgegen der Flugrichtung relativ zum Klappensegment 4 nachfolgende Klappensegment 6 ausgelenkt werden kann. Dazu ist eine Zahnscheibe 24 drehbar an einem Scharnier 36 gelagert. Das Scharnier 36 ist am Gehäuse des Zentralantriebs 12 oder am Flügel 2 angeordnet. Die Zahnscheibe 24 ist über eine Schubstange 28 mit dem Klappensegment 6 gelenkig verbunden. Die Drehung des Klappensegmentes 6 erfolgt über das Scharnier 38, welches am Klappensegment 4 befestigt ist.

Ein Rotieren der Zahnscheibe 24 durch Antreiben des Ritzels 18 führt demnach zum Auslenken der Schubstange 28, welche ein Rotieren des Klappensegments 6 um das Scharnier 38 auslöst. Das Klappensegment 6 wird dadurch relativ zum in Flugrichtung vorwärts gelegenen Klappensegment 4 ausgelenkt oder eingefahren. Auch hier ist der Bewegungsablauf des Klappensegments 6 relativ zum Klappensegment 4 abhängig von der Positionierung des Scharniers 38 und führt bei entsprechender Auslegung bei ausgefahrenem Klappensegment 6 zu einem Spalt zwischen den Klappensegmenten 4 und 6, falls gewünscht.

Figur 2c stellt die Schnittebene C-C dar und zeigt, wie das Klappensegment 8 von dem Zentralantrieb 12 angesteuert wird. Das Klappensegment 8 ist über das Scharnier 40 drehbar mit dem Klappensegment 6 verbunden. Die Schubstangen 30 und 42 verbinden das Klappensegment 8 mit dem Zentralantrieb 12, wobei ein an einem Gelenkpunkt 44 gelagerter Lenker 46 die Relativbewegung aus Klappensegment 4 und Flügel 2 auf die Schubstangen 30 und 42 überträgt. Die Schubstange 30 ist mit der Zahnscheibe 26 verbunden, welche im Scharnierpunkt 48 drehbar gelagert ist. Der Scharnierpunkt 48 befindet sich am Gehäuseboden des Zentralantriebes 12 oder am Flügel 2.

Die Ansteuerung aus dem Zentralantrieb 12 erfolgt über das Ritzel 20 auf die Zahnscheibe 26 und dessen Verbindung über die Schubstangen 30 und 42 mit dem Klappensegment 8. Demzufolge wird das Klappensegment 8 relativ zum Klappensegment 6 durch Rotieren des Ritzels 20 ausgelenkt. Erneut kann zwischen den Klappensegmenten 8 und 6 im Hochauftrieb ein Spalt durch entsprechende Auslegung vorgesehen werden, falls gewünscht.

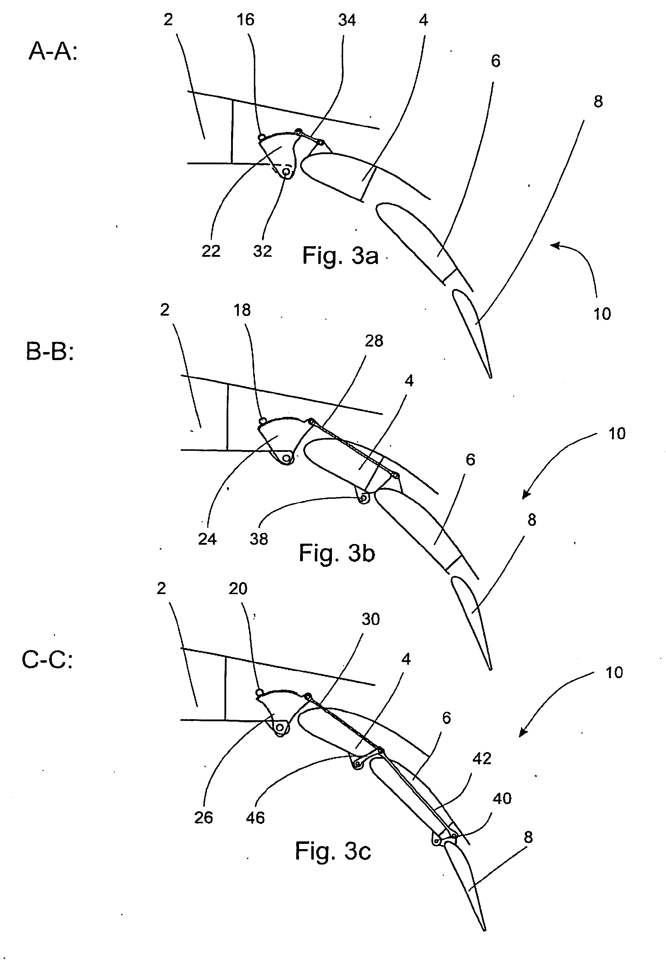

Zur Verdeutlichung der Auslenkung der Klappensegmente 4, 6 und 8 dienen die Figuren 3a-c, in denen die Hinterkantenklappe 10 des Flügels 2 durch ausgelenkte Klappensegmente 4, 6 und 8 eine Hochauftriebsstellung aufweist.

In der Figur 3a wird in der Schnittebene A-A gezeigt, wie die Zahnscheibe 22 vollständig durch das Ritzel 16 um das Scharnier 32 rotiert ist. Über die Verbindung der Zahnscheibe 22 und das Klappensegment 4 mittels der Schubstange 34 ist das Klappensegment 4 relativ zum Flügel 2 ausgelenkt. In Figur 3a ist die Scharnierachse 32 der Zahnscheibe 22 identisch mit der Scharnierachse des Klappensegments 4. Dies ist jedoch nicht notwendig, das Klappensegment 4 kann auch eine von der Scharnierachse 32 getrennte Scharnierachse aufweisen.

Die ausgefahrene Endstellung von Klappensegment 6 ist in Figur 3b in der Schnittebene B-B gezeigt. Erreicht wurde diese Endstellung durch Drehung der durch das Zentralgetriebe 12 über das Ritzel 18 angesteuerten Zahnscheibe 24. Die Gesamtbewegung - die Neigung und Auslenkung - des Klappensegments 6 ist ausgeprägter als die des Klappensegments 4, was durch die Getriebeübersetzung als auch durch die entsprechende Wahl der Anlenkpunkte erzielt wurde.

Nach dem gleichen Prinzip erfolgt die Bewegung des Klappensegments 8 gemäß Figur 3c in der Schnittebene C-C. Auch hier ist durch das Übersetzungsverhältnis und die Wahl der Anlenkpunkte die Bewegung und Endposition des Klappensegments 8 eine größere als die der vorgelagerten Klappensegmente 6 und 4.

Die Hinterkantenklappe 10 weist in der Darstellung aus den Figuren 3a-c eine größere Oberfläche und größere Krümmung auf, als im eingefahrenen Zustand in den Figuren2a-c. Zwischen dem Flügel 2 und den Klappensegmenten 4, 6 und 8 befinden sich weiterhin exemplarisch Spalte, die einen Strömungsabriss auf der Oberseite der Hinterkantenklappe 10 durch Zuführen energiereicher Strömung von der Unterseite des Flügels 2 verzögern oder eliminieren können.

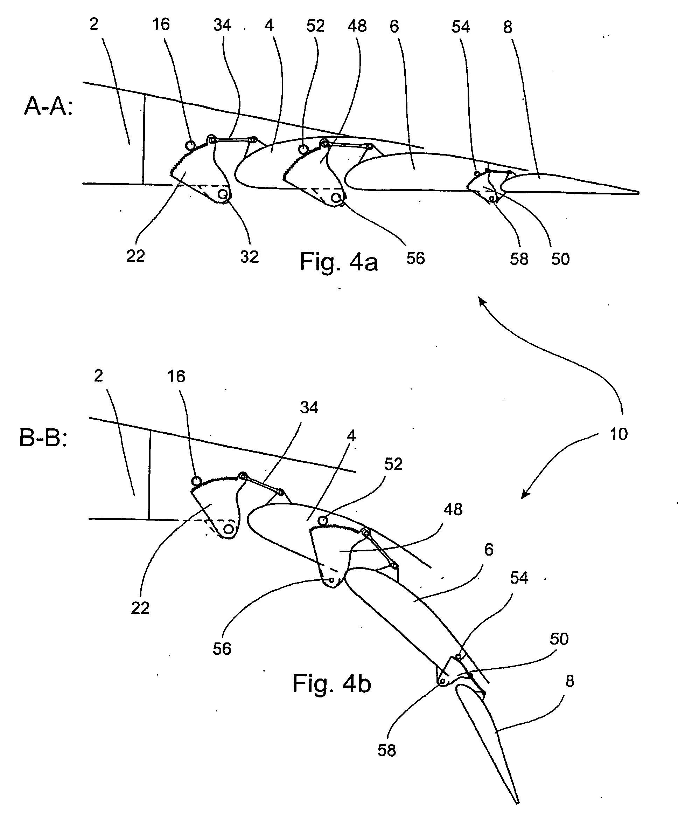

Bei einem in den Figuren 4a und 4b gezeigten Klappenantrieb werden die Klappensegmente 4, 6 und 8 ebenfalls durch verzahnte Bewegungselemente ausgelenkt. Dafür werden Zahnscheiben 22, 48 und 50 verwendet, welche durch Ritzel 16, 52 und 54 angetrieben werden. Die Besonderheit dieses Ausführungsbeispiels liegt darin begründet, dass die Ritzel 52 und 54 sowie die Zahnscheiben 48 und 50 mit ihren Lagern 56 und 58 direkt in den Klappensegmenten 4 und 6 angeordnet sind. Dies hat zur Folge, dass die Antriebseinheiten der Ritzel 52 und 54 ebenfalls in den Klappensegmenten 4 und 6 positioniert sind und die Bewegungen der Zahnscheiben 48 und 50 über eine sehr kurze Distanz an die Klappensegmente 6 und 8 übertragen werden. Die Antriebseinheiten der Ritzel 52 und 54 können beispielsweise als Elektromotoren realisiert werden, welche direkt mit den Ritzeln 52 und 54 verbunden sind. Dadurch weist dieses Ausführungsbeispiel eine geringere Komplexität als das erste Ausführungsbeispiel auf.

Falls es im Hinblick auf die Antriebslasten eine bestimmte Verzahnung zwischen den Ritzeln 52 und 54 und den Zahnscheiben 48 und 50 vorteilhaft ist, jedoch nicht zu den Drehzahlen der Antriebseinheiten passt, können die Antriebseinheiten auch als Getriebemotoren ausgeführt werden oder zwischen den Antriebseinheiten und den Ritzeln 16, 52 und 54 Getriebe zwischengeschaltet werden.

Die für Hochauftrieb ausgelenkte Hinterkantenklappe 10 des zweiten Ausführungsbeispiels wird in Figur 4b dargestellt. Die Zahnscheiben 22, 48 und 50 sind durch die Ritzel 16, 52 und 54 vollständig ausgelenkt, analog zu den Darstellungen in den Figuren 3a-3c. Der Flügel weist dadurch eine ausgeprägte Wölbung und eine größere Fläche auf und ist mit Spalten durchsetzt.

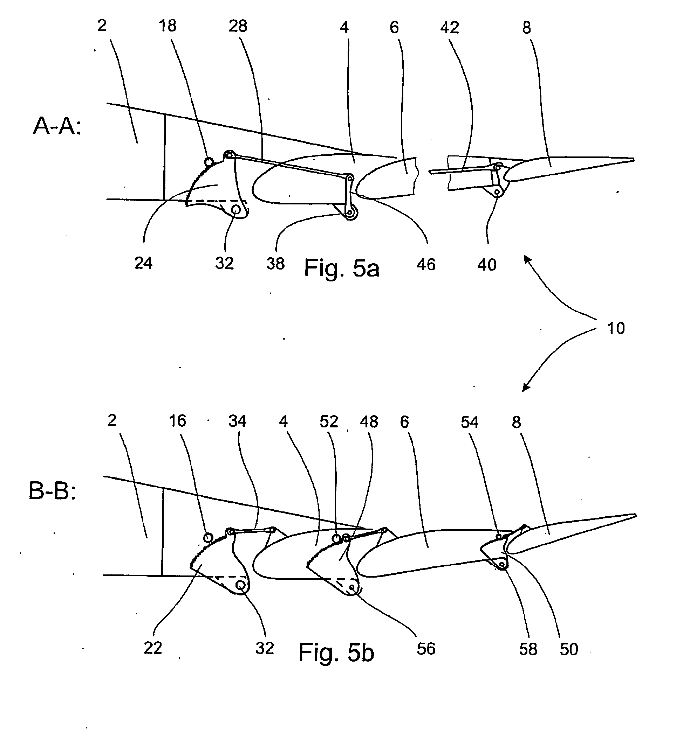

Beide gezeigten Klappenantriebe können ebenfalls für verschiedene Klappenanstellungen während des Reiseflugs genutzt werden. Hierfür können alle Klappensegmente 4, 6 und 8 gleichmäßig oder individuell und getrennt voneinander nach oben und unten bewegt werden. In den Figuren 5a und 5b sind beispielhafte Klappenanstellungen für den Reiseflug anhand der beiden Ausführungsbeispiele dargestellt, bei denen die beiden hinteren Klappensegmente 6 und 8 ausgelenkt sind.

Das Ausführungsbeispiel beschränkt nicht den Umfang der Erfindung, sondern dient der Erläuterung der erfindungsgemäßen Merkmale der vorgeschlagenen Vorrichtung zum Bewegen einer Hinterkantenklappe eines Flugzeugs. Es sind jederzeit andere Varianten der erfindungsgemäßen Vorrichtung denkbar, die weniger oder mehr als drei Klappensegmente aufweisen, falls dies im Bezug auf die aerodynamische Ausgestaltung und die auftretenden Lasten erforderlich oder gewünscht ist oder falls zukünftige Vorschriften höhere Auftriebsbeiwerte erforderlich machen. Es sind weiterhin alle Varianten der erfindungsgemäßen Vorrichtung denkbar, die Gegenstand der Ansprüche sind. Z

Die gezeigten Zahnscheiben können weiterhin andere Formen annehmen und beispielsweise auch als Zahnstangen ausgeführt sein, die ferner unabhängig von Scharnierachse und/oder Scharnierbeschlägen positioniert werden können.

## Patentansprüche

1. Flugzeug umfassend einen Flugzeugflügel (2) mit einer Hinterkantenklappe (10) und eine Vorrichtung zum Bewegen der Hinterkantenklappe (10), wobei die Hinterkantenklappe (10) eine Mehrzahl von Klappensegmenten (4, 6, 8) aufweist, die miteinander über jeweils ein Scharnier (38, 46, 40) gelenkig verbunden sind und ein erstes Klappensegment bewegbar am Flügel gelagert ist, wobei die Vorrichtung aufweist:
- einen Zentralantrieb (12) und mehrere Ritzel (16, 18, 20), die von dem Zentralantrieb (12) angetrieben werden,
- mehrere verzahnte Bewegungselemente (22, 24, 26), die jeweils mit einem eigenen der Ritzel (16, 18, 20) in Eingriff stehen, so dass der Zentralantrieb (12) mittels Drehung der Ritzel (16, 18, 20) die verzahnten Bewegungselemente (22, 24, 26) bewegen kann, und
- Schubstangen, von denen jede jeweils mit einem der verzahnten Bewegungselemente (22, 24, 26) und einem der Klappensegmente (4, 6, 8) verbunden ist,
**dadurch gekennzeichnet, dass** die Bewegungselemente (22, 24, 26) jeweils eine Zahnscheibe oder eine Zahnstange sind und der Zentralantrieb (12) mehrere funktional voneinander getrennte Getriebeeinheiten aufweist, die jeweils einem der Klappensegmente (4, 6, 8) zugeordnet sind und die jeweils über ein eigenes Ritzel (16, 18, 20) und über ein separates der Bewegungselemente (22, 24, 26) das zugeordnete Klappensegment (4, 6, 8) antreiben.

2. Flugzeug nach dem Anspruch 1, bei dem der Zentralantrieb (12) mit einer oder mehreren Antriebseinheiten direkt oder über eine oder mehrere Wellen (14) verbunden ist.

3. Flugzeug nach einem der Ansprüche 1 oder 2, bei der jede Getriebeeinheit eine Einrichtung zum Bremsen des Getriebeausgangs und/oder eine Kupplung zum Einkuppeln des Getriebeausgangs der Getriebeeinheit aufweist.

## Claims

1. Aircraft comprising an aircraft wing (2) with a trailing edge flap (10) and a device for moving the trailing edge flap (10), wherein the trailing edge flap (10) has a plurality of flap segments (4, 6, 8) which are respectively connected to each other by a hinge (38, 46, 40), and a first flap segment is moveably mounted on the wing, wherein the device comprises:
- a central drive (12) and multiple pinions (16, 18, 20) that are driven by the central drive (12),
- multiple toothed movement elements (22, 24, 26) that are respectively engaged with an own one of the pinions (16, 18, 20), so that the central drive (12) is able to move the toothed movement elements (22, 24, 26) by means of rotating the pinions (16, 18, 20), and
- push rods each of which is respectively connected with one of the toothed movement elements (22, 24, 26) and one of the flap segments (4, 6, 8),
**characterized in that** the movement elements (22, 24, 26) are respectively a toothed disc or a toothed rack, and the central drive (12) comprises several transmission units functionally separated from each other, which are respectively associated with one of the flap segments (4, 6, 8), and respectively drive the associated flap segment (4, 6, 8) via an own pinion (16, 18, 20) and via a separate one of the movement elements (22, 24, 26).

2. Aircraft according to claim 1, wherein the central drive (12) is connected to one or more drive units directly or via one or more shafts (14).

3. Aircraft according to one of claims 1 or 2, wherein each transmission unit comprises a means for braking the transmission output and/or a coupling for engaging the transmission output of the transmission unit.

## Revendications

1. Avion comprenant une aile d'avion (2) avec un volet de bord de fuite (10) et un dispositif destiné à déplacer le volet de bord de fuite (10), le volet de bord de fuite (10) présentant une pluralité de segments de volet (4, 6, 8) qui sont reliés l'un à l'autre de façon articulée par le biais d'une charnière (38, 46, 40) respective et un premier segment de volet étant monté de façon mobile sur l'aile, le dispositif présentant :
- un entraînement central (12) et plusieurs pignons (16, 18, 20) qui sont entraînés par l'entraînement central (12),
- plusieurs éléments de déplacement dentés (22, 24, 26) qui sont chacun en prise avec un pignon (16, 18, 20) y afférent de telle sorte que l'entraînement central (12) peut déplacer les éléments de déplacement dentés (22, 24, 26) en faisant tourner les pignons (16, 18, 20), et
- des bielles dont chacune est reliée respectivement avec un des éléments de déplacement dentés (22, 24, 26) et un des segments de volet (4, 6, 8),
**caractérisé en ce que** les éléments de déplacement (22, 24, 26) sont chacun une rondelle à dents ou une crémaillère et **en ce que** l'entraînement central (12) présente plusieurs unités de transmission séparées l'une de l'autre au niveau fonctionnel qui sont chacune adjointes à un des segments de volet (4, 6, 8) et qui entraînent chacune le segment de volet (4, 6, 8) qui leur est adjoint par le biais d'un pignon (16, 18, 20) qui leur est propre et par le biais d'un élément de déplacement (22, 24, 26) distinct.

2. Avion selon la revendication 1, dans lequel l'entraînement central (12) est relié avec une ou plusieurs unités d'entraînement directement ou par le biais d'un ou de plusieurs arbres (14).

3. Avion selon l'une des revendications 1 ou 2, dans lequel chaque unité de transmission présente un dispositif destiné à freiner la sortie de la transmission et/ou un couplage destiné à coupler la sortie de la transmission de l'unité de transmission.
